# EUROPÄISCHE PATENTANMELDUNG

(11) **EP 0 537 725 A2**
(43) Veröffentlichungstag der Anmeldung: **21.04.1993**
(21) Anmeldenummer: 92117588.1
(22) Anmeldetag: 15.10.1992
(51) Int. Cl.: F23Q 7/00, B60N 3/14

(54) **Kfz.-Steckdose mit einem Bimetallkontaktgeber**

(30) Priorität: 16.10.1991 DE 4134171
(71) Anmelder: SCHOELLER & CO. Elektrotechnische Fabrik GmbH & Co., D-60559 Frankfurt (DE)
(72) Erfinder: Fischer, Alexander, W-6380 Bad Homburg v.d.H. (DE); Hofmann, Dieter, W-8750 Aschaffenburg (DE); Merchel, Roland, W-6070 Langen (DE); Metzger, Jürgen, W-6050 Offenbach (DE)

(57) **Zusammenfassung**

2.1 Eine für Kfz-Stecker geeignete, insbesondere zur Aufnahme eines Glühkopfsteckers für Zigarrenanzünder vorgesehene Kfz-Steckdose ist mit einer Bimetallfeder (3) zur Kontaktierung des Steckers und mit einem Bimetallkontaktgeber (11) ausgestattet, der beim Auftreten einer Überhitzung der Steckdose einen Schaltvorgang auslöst, durch den eine mittelbare oder unmittelbare Unterbrechung des die Steckdose (1) versorgenden Stromkreises erfolgt. Der Bimetallkontaktgeber soll gegenüber allen in die Kfz-Steckdose (1) eingebrachten Gegenstände vor einer unzulässigen Betätigung geschützt werden.

2.2 Zwischen einer Arretierungsscheibe (10) und dem Boden einer Steckdosenhülse (2) ist eine Kontaktkammer (22) ausgebildet, in der als erstes Kontaktteil der Bimetallkontaktgeber (11) und als zweites Kontaktteil ein Kontaktblech (14) angeordnet ist. Die beiden als Überhitzungsschutz wirkenden Kontaktteile (11, 14) sind durch die Arretierungsscheibe (10) zur Öffnung der Steckdose (1) hin abgedeckt.

## Beschreibung

Die Erfindung betrifft eine Kfz-Steckdose nach dem Oberbegriff des Anspruches 1.

Aus der DE 3 932 604 C1 ist ein elektrischer Zigarrenanzünder bekannt, bei dem eine Kfz-Steckdose zur Kontaktierung des Glühkopfsteckers mit einer Bimetallfeder versehen ist. Außer dieser für den normalen Betrieb erforderlichen Bimetallfeder ist die Kfz-Steckdose noch mit einem Bimetallkontaktgeber ausgerüstet, der beim Auftreten einer Überhitzung einen Schaltvorgang auslöst, durch den eine Unterbrechung des die Steckdose versorgenden Stromkreises erfolgt.
Bei dem bekannten Zigarrenanzünder dient als Bimetallkontaktgeber eine Bimetallschnappscheibe, die nach dem Auslösen des Schaltvorganges beim Abkühlen nicht selbsttätig in ihre Betriebsstellung zurückkehrt, sondern durch Hilfsmittel zurückgestellt werden muß. Soweit diese Hilfsmittel unmittelbar in den Zigarrenanzünder integriert sind, bedingen sie einen relativ komplizierten Aufbau. Andererseits ist das Zuhilfenehmen eines Werkzeuges nicht jedermanns Sache, da es hierzu eines gewissen Geschickes bedarf und außerdem muß die hierzu erforderliche konstruktive Gestaltung des Zigarrenanzünders so erfolgen, daß der Bimetallkontakgeber mit Hilfe des Werkzeugs erreichbar ist. Bei einem leicht zugänglichen Bimetallkontaktgeber kann jedoch eine Beschädigung durch unsachgemäße Behandlung nicht ausgeschlossen werden. Das gilt sowohl für Kfz-Steckdosen, bei denen der Bimetallkontaktgeber außerhalb der Steckdosenhülse im Montagebereich angeordnet ist, sowie für innerhalb der Steckdosenhülse liegende Bimetallkontaktgeber, die in Steckrichtung des Glühkopfsteckers mit einem Werkzeug ereichbar sind.

Aufgabe der Erfindung ist es, bei einer Kfz-Steckdose der im Oberbegriff des Anspruches 1 genannten Art den Bimetallkontaktgeber des Überhitzungsschutzes so zu schützen und abzukapseln, daß er weder vom Montagebereich, noch vom Armaturenbrett aus mittels eines Schraubendrehers oder dergleichen erreicht und betätigt werden kann.

Diese Aufgabe wird durch die im Anspruch 1 gekennzeichneten Mermale gelöst. Zweckmäßige Ausgestaltungen und Weiterbildungen des Erfindungsgegenstandes sind in den Unteranprüchen genannt.

Einen besonders einfachen Aufbau erhält man dadurch, daß man eine an sich bereits aus der DE 3 932 604 C1 bekannte Arretierungsscheibe entsprechend vergrößert und so gestaltet, daß zwischen ihr und dem Boden der Steckdosenhülse eine Kontaktkammer ausgebildet ist. In dieser, somit zur Öffnung der Steckdose hin abgedeckten Kontaktkammer sind als erstes Kontaktteil der Bimetallkontaktgeber und als zweites Kontaktteil ein Kontaktblech angeordnet.

Die erfindungsgemäß erreichte Kapselung ist von besonderer Bedeutung, wenn in weiterer Ausbildung des Erfindungsgegenstandes jedes der beiden Kontaktteile mit einem anderen Pol einer Spannungsquelle zur Stromversorgung verbunden wird. Das im Fall einer Überhitzung erfolgende Kontaktieren der beiden Kontaktteile bewirkt in diesem Fall einen Kurzschluß, der zum Ansprechen einer den Stromkreis schützenden Sicherung führt. Um ein unnötiges Zerstören der vorgeschalteten Sicherung zu verhindern, muß also unbedingt vermieden weren, daß der Kurzschlußkontakt auch dann betätigt werden kann, wenn keine Überhitzung vorliegt, was durch die Kapselung erreicht wird.

Für eine rationelle Fertigung ist es von wesentlicher Bedeutung, daß alle für die Kapselung des Überhitzungsschutzes erforderlichen kontaktierenden und isolierenden Teile auf einfache Weise miteinander verbunden werden. Hierzu ist der die Arretierungsscheibe durchdringende Schaft an seinem der Steckdosenöffnung zugewandten Ende mit einem Schaft-Bördelrand versehen, mit dem er auf der zur Kontaktierung des Glühkopfsteckers erforderlichen Bimetallfeder aufliegt und nacheinander diese, die Arretierungsscheibe, den Bimetallkontaktgeber, eine obere Isolationsscheibe, das Kontaktblech, den Boden der Steckdosenhülse, eine Halteplatte für einen ersten Flachkontakt und eine untere Isolationsscheibe durchdringt.

Dem Bördelrand gegenüberliegend, am anderen Ende des Schaftes, ist dieser mit einem Schaftansatz versehen, an den sich ein zweiter Flachkontakt anschließt. Die genannten Teile werden somit zwischen Schaftansatz und Schaftbördelrand zusammengehalten.

Der Stromkreis verläuft ausgehend vom zweiten Flachkontakt über den Schaft zur Bimetallfeder und von dieser über einen in die Steckdose eingesteckten Stecker zurück über die Steckdosenhülse zur Halteplatte und von dieser zum ersten Flachkontakt.

Der Überhitzungsschutz ist in zweckmäßiger Weise so aufgebaut, daß der Bimetallgeber mit dem Schaft kontaktiert und im Überhitzungsfall mit einem Kontaktniet das Kontaktblech berührt und den Stromkreis vor dem Stecker kurzschließt.

Im Bereich des Kontaktnietes ist die Kontaktkammer durch eine in der Arretierungsscheibe vorgesehene Ausnehmung erweitert. Weiterhin besitzt die Arretierungsscheibe zwei konische Führungszapfen, die den Bimetallkontaktgeber, das Kontaktblech und den Boden durchgreifen. Zur Trennung des Bimetallkontaktgebers vom Kontaktblech ist zwischen den Fügezapfen des Arretierungsteils die obere Isolationsscheibe eingefügt, die im Randbereich zwei die Fügezapfen teilweise aufnehmende Mulden besitzt. An der oberen Isolationsscheibe angeformte Haltestücke ermöglichen ihr in das Kontaktblech einzugreifen, mit dem es durch Klemmsitz eine Einheit bildet.

Zur Aufnahme der Bimetallfeder besitzt das Arretierungsteil beidseitig einer den Schaft aufnehmenden Zentralbohrung eine Vertiefung mit Schrägflächen, die an die Form der Bimetallfeder angepaßt ist.

Als Bimetallkontaktgeber dient eine elastische Blattfeder, die eine Zunge mit einem Mittelloch und einem das Mittelloch umschließenden, den Schaft kontaktierenden Mittelloch-Bördelrand besitzt. Von der Zunge ausgehend beidseitig zu ihr erstecken sich zwei Seitenschenkel, die das freie Ende der Zunge mit einem Verbindungssteg umschließen. Mittig auf dem Verbindungssteg ist der Kontaktniet befestigt.

Während das Kontaktblech noch innerhalb der Steckdosenhülse mit seinem freien Ende in der Kontaktkammer liegt, ist die Halteplatte für den ersten Flachkontakt unter dem Boden, also außerhalb der Steckdosenhülse auf ihm befestigt. Sie ist mit einem Fügeschlitz zur Aufnahme der Fügezapfen der Arretierungsscheibe und der Haltestücke der oberen Isolationsscheibe versehen. Rechtwinklig zur Halteplatte ist sowohl der erste Flachkontakt, als auch die ihm gegenüberliegende Lasche angeformt. Zwei Zapfenlöcher in der Halteplatte dienen zum Einstecken von Haltezapfen der unteren Isolationsscheibe.

Die untere Isolationsscheibe besitzt weiterhin an zwei gegenüberliegenden Seiten ihres im wesentlichen runden Außenrandes eine zum Schaftloch parallel verlaufende Aussparung, und ist hierzu rechtwinklig versetzt an zwei gegenüberliegenden Seiten ihres runden Außenrandes so abgeflacht, daß sie von der Halteplatte mit dem ersten Flachkontakt und der Lasche übergriffen werden kann.

Die sich außerhalb der Steckdosenhülse an die Halteplatte anschließende untere Isolationsscheibe ist nach außen liegend konzentrisch zu ihrem Schaftloch mit einer Vertiefung versehen, in der sich zwei Fixierzapfen befinden. In dieser Vertiefung ruht der zwischen dem Schaft und dem Flachkontakt liegende Schaftansatz und wird durch die Fixierzapfen, die in Absenkungen eingreifen, verdrehungssicher gehalten.

Ein Ausführungsbeispiel der Erfindung ist in den Zeichnungen dargestellt und wird im folgenden näher beschrieben.

Es zeigen:
- Fig. 1: einen Axialschnitt durch den unteren Teil einer Kfz-Steckdose mit Bimetallfeder und Steckkontaktanordnung,
- Fig. 2: einen Axialschnitt durch die Steckdosenhülse,
- Fig. 3: einen Schnitt entlang der Linie III-III in Fig. 2,
- Fig. 4: eine Draufsicht auf die Bimetallfeder einer Kfz-Steckdose,
- Fig. 5: einen Schnitt entlang der Linie V-V in Fig. 4,
- Fig. 6: eine Draufsicht auf die Arretierungsscheibe,
- Fig. 7: einen Schnitt entlang der Linie VII-VII in Fig. 6,
- Fig. 8: einen Schnitt entlang der Linie VIII-VIII in Fig. 6,
- Fig. 9: eine Ansicht der Arretierungsscheibe von unten,
- Fig. 10: eine Draufsicht auf den Bimetallkontaktgeber des Überhitzungsschutzes,
- Fig. 11: einen Schnitt entlang der Linie XI-XI in Fig. 10,
- Fig. 12: eine Draufsicht auf die den Bimetallkontaktgeber abstützende obere Isolationsscheibe,
- Fig. 13: einen Schnitt entlang der Linie XIII-XIII in Fig. 12.
- Fig. 14: eine Seitenansicht der oberen Isolationsscheibe,
- Fig. 15: ein Kontaktblech, das den Gegenkontakt zum Bimetallkontaktgeber nach Fig. 10 und 11 bildet,
- Fig. 16: eine Draufsicht auf den ersten Flachkontakt der Steckkontaktanordnung mit Halteplatte,
- Fig. 17: eine Seitenansicht des Flachkontaktes nach Fig. 16,
- Fig. 18: eine Draufsicht auf die untere Isolationsscheibe für den zweiten Flachkontakt nach Fig. 21 bis 23,
- Fig. 19: einen Schnitt entlang der Linie IXX-IXX in Fig. 18,
- Fig. 20: eine Seitenansicht der unteren Isolationsscheibe,
- Fig. 21: eine Draufsicht auf den zweiten Flachkontakt der Steckkontaktanordnung,
- Fig. 22: eine Seitenansicht des zweiten Flachkontaktes und
- Fig. 23: eine Ansicht des zweiten Flachsteckkontaktes von unten.

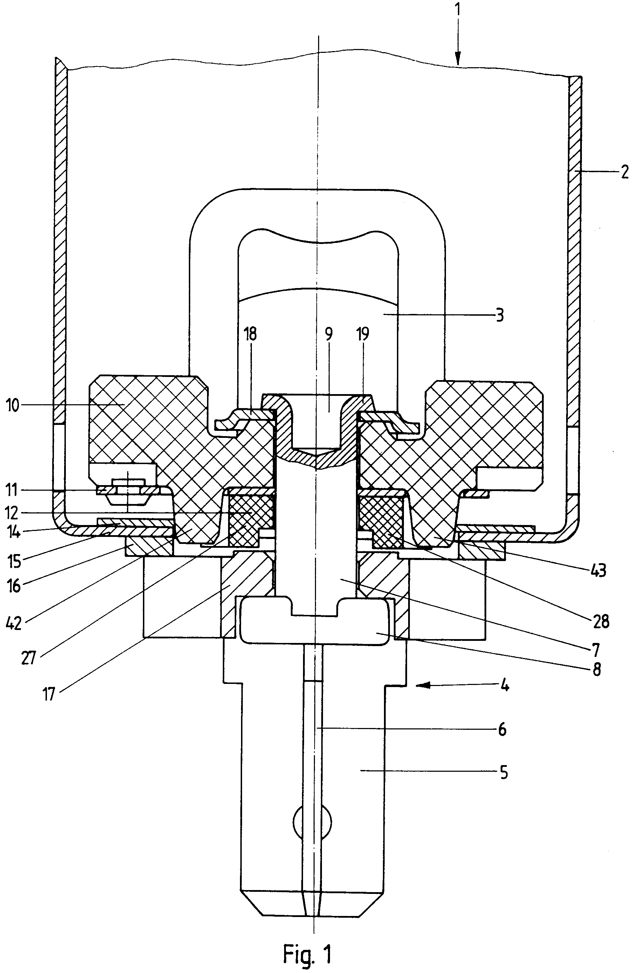

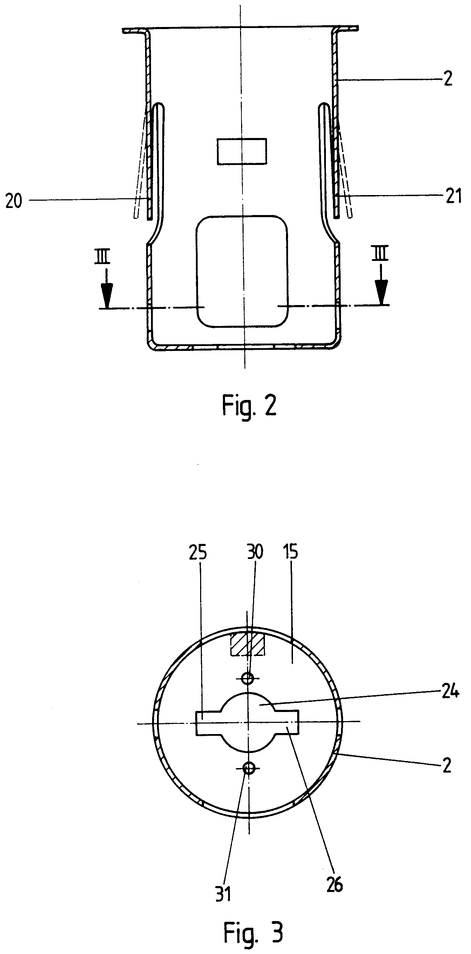

Fig. 1 zeigt den Zusammenbau der in den Figuren 2 bis 23 dargestellten Einzelteile einer Kfz-Steckdose. Auf die Darstellung eines Glühkopfsteckers oder eines sonstigen, in die Kfz-Steckdose einsteckbaren Kfz-Steckers wurde verzichtet.
Die Kfz-Steckdose 1 besitzt eine Steckdosenhülse 2, eine Bimetallfeder 3, die zur Kontaktierung eines Kfz-Steckers dient und eine Steckkontaktanordnung 4 mit einem ersten Flachkontakt 5 und einem zweiten Flachkontakt 6. Der zweite Flachkontakt 6 ist dabei mit einem Schaftansatz 8 verbunden, auf dessen anderer Seite in Verlängerung des Flachkontaktes ein Schaft 7 angeformt ist, der an seinem freien Ende eine axiale Bohrung 9 besitzt, die in ihrem Randbereich zum Fixieren der Bimetallfeder 3 zu einem Schaft-Bördelrand 19 umgebördelt wird.

Zwischen dem Bördelrand 19 und dem Schaftansatz 8 werden eine Arretierungsscheibe 10, ein zum Überhitzungsschutz gehöriger Bimetallkontaktgeber 11, eine obere Isolationsscheibe 12, ein ebenfalls zum Überhitzungsschutz gehöriges Kontaktblech 14, ein zur Steckdosenhülse 2 gehöriger Dosenboden 15, eine den ersten Flachkontakt 5 tragende Halteplatte 16 und eine untere Isolationsscheibe 17 von dem Schaft 7 durchdrungen und zusammengehalten.

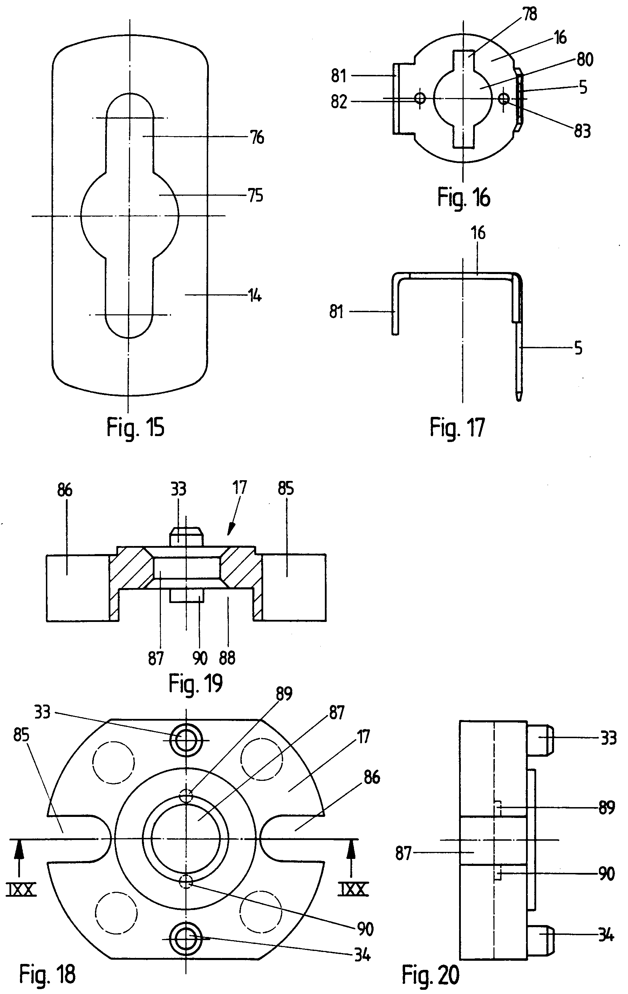

Wie die Fig. 2 und 3 zeigen, besitzt die Steckdosenhülse 2 zwei ausgestanzte Federzungen 20, 21, die zum Festklemmen des in die Steckdosenhülse 2, eingesetzten, nicht dargestellten Steckers dienen. Der Glühkopfstecker eines Zigarrenanzünders weist in der Regel eine Steckhülse, ein Heizelement zum Anzünden einer Zigarre oder Zigarette und einen Handgriff zum Einschieben oder Herausziehen des Steckers auf. Im Dosenboden 15 der Steckdosenhülse 2 befindet sich ein Führungssloch 24 mit Schlitzen 25, 26 für konisch geformte Fügezapfen 42, 43 der Arretierungsscheibe 10 und Haltestücke 27, 28 der oberen Isolationsscheibe 12. Ferner sind zwei Bodenlöcher 30, 31 im Dosenboden 15 vorhanden, in die Haltezapfen 33, 34 der in den Fig. 18 bis 20 dargestellten unteren Isolationsscheibe 17 eingreifen.

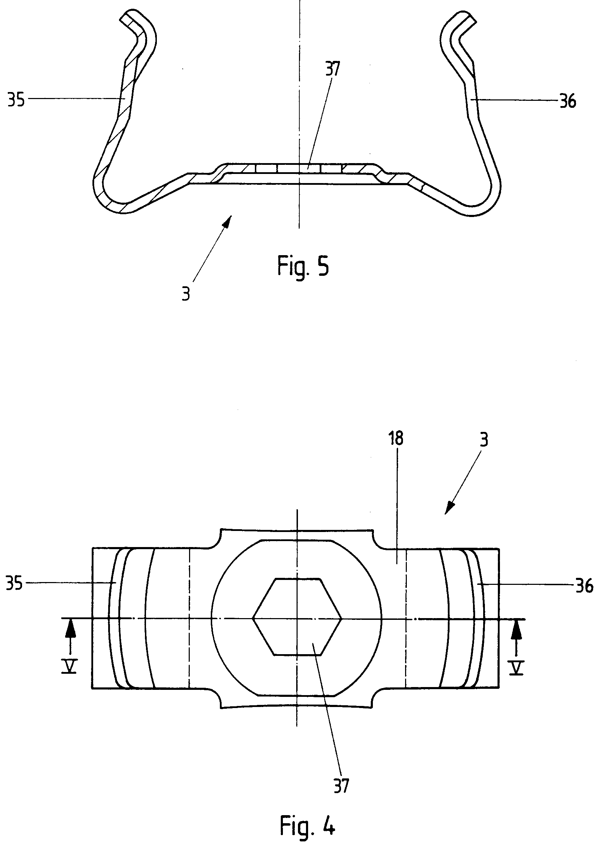

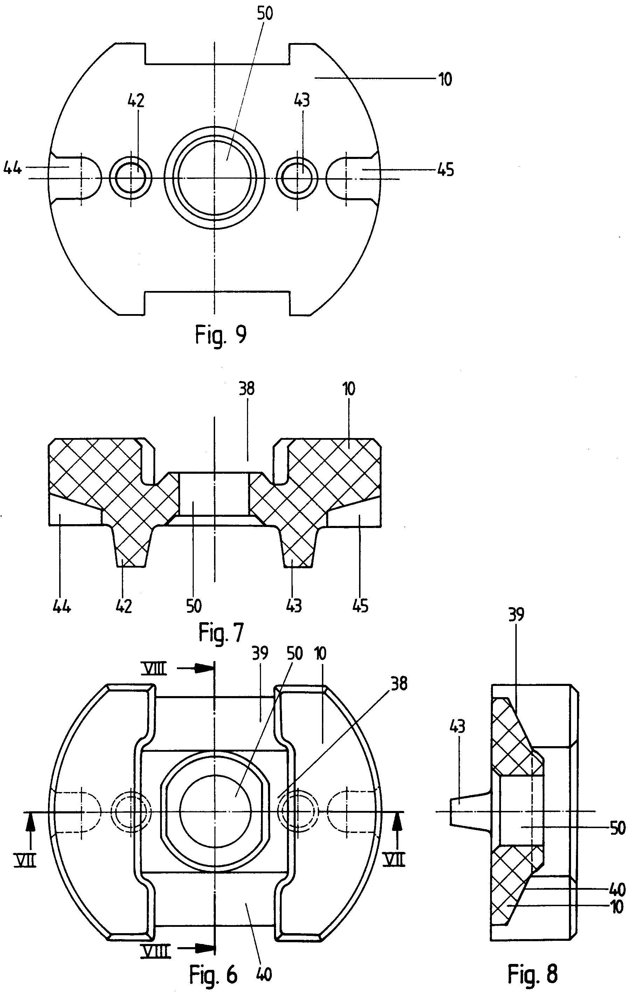

Wie die Fig. 4 und 5 zeigen, besitzt die Bimetallfeder 3 einen Quersteg 18, der beidseitig in zwei Federschenkel 35, 36 übergeht, die zum Festhalten des Glühkopfsteckers in seiner Einschaltstellung dienen. Ein Sechskantloch 37 im Quersteg 18 ist für den Schaft 7 des zweiten Flachkontaktes 6 bestimmt.

Die in den Fig. 6 bis 9 dargestellte Arretierungsscheibe 10 dient zur Aufnahme und Fixierung der Bimetallfeder 3. Hierzu besitzt sie eine Vertiefung 38 mit zwei Schrägflächen 39, 40, in welche die Bimetallfeder 3 eingesetzt und in der sie durch den Schaftbördelrand 19 gehalten wird. An der Unterseite der Arretierungsscheibe 10 befinden sich zwei konische Fügezapfen 42, 43, zu deren Aufnahme Führungsschlitze 25, 26 im Boden 15 der Steckdosenhülse 2 vorgesehen sind. Weiterhin besitzt die Arretierungsscheibe 10 auf ihrer Unterseite noch zwei Ausnehmungen 44, 45 zur Aufnahme eines am Bimetallkontaktgeber 11 vorgesehenen Nietkopfes 48. Eine Zentralbohrung 50 in der Arretierungsscheibe 10 dient zur Aufnahme des mit dem zweiten Flachkontakt 6 verbundenen Schaftes 7.

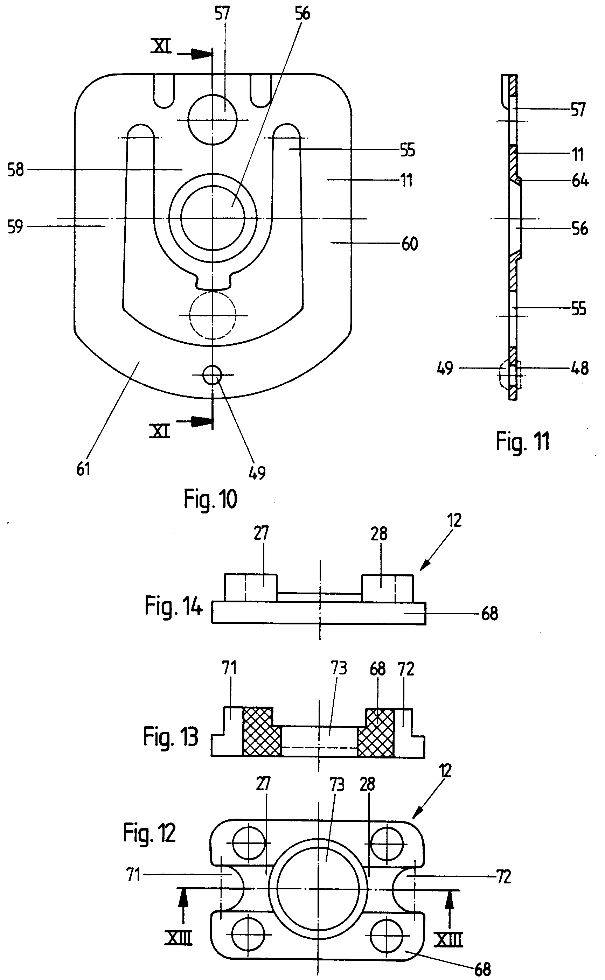

In den Fig. 10 und 11 ist die Bimetallkontaktfeder dargestellt, die aus einer elastischen Blattfeder mit einem Ausschnitt 55, einem Mittelloch 56 und einem Seitenloch 57 besteht. Der Ausschnitt 55 ist U-förmig gestaltet, so daß eine Zunge 58 und zwei Seitenschenkel 59, 60, die durch einen Verbindungssteg 61 miteinander verbunden sind, gebildet werden. Der Verbindungssteg 61 trägt den Kontaktniet 49. Das Mittelloch 56 nimmt den Schaft 7 des Flachsteckkontaktes 6 und das Seitenloch 57 der Fügezapfen 42 oder 43 der Arretierungsscheibe 10 auf. Ein das Mittelloch 56 umschließender abstehender Mittelloch-Bördelrand 64 legt sich zur Wärme- und Stromleitung an den Schaft 7 an. Die Unterseite der Arretierungsscheibe 10 dient als Auflagefläche für den Bimetallkontaktgeber 11.

Die obere Isolationsscheibe 12 ist in den Fig. 12 bis 14 dargestellt und besteht aus einer Platte 68 mit zwei Haltestücken 27, 28, zwei Aussparungen 71, 72 und einem Zentralloch 73. Die Haltestücke 27, 28 werden in den in seiner Mitte mit einer runden Öffnung 75 für den Schaft 7 des zweiten Flachhontaktes 6 versehenen Durchgriffsschlitz 76 des Kontaktbleches 14 eingeklemmt, so daß Kontaktblech 14 und obere Isolationsscheibe 12 eine Einheit bilden. Die Mulden 71 und 72 der Isolationsscheibe 12 dienen zur Aufnahme der Fügezapfen 42, 43 der Arretierungsscheibe 10. Unter dem Dosenboden 15 der Steckdosenhülse 2 befindet sich die Halteplatte 16 mit dem ersten Flachkontakt 5, wie in den Fig. 16 und 17 dargestellt. Die Platte 16 weist einen Fügeschlitz 78 für die Fügezapfen 42, 43 der Arretierungsscheibe 10 und Haltestücke 27, 28 der oberen Isolationsscheibe 12 auf. Der Fügeschlitz 78 hat in seiner Mitte eine Durchführöffnung 80 für den Schaft 7 des zweiten Flachkontaktes 6. Eine parallel zum ersten Flachkontakt 5 verlaufende Lasche 81 an der Halteplatte 16, die breiter als der erster Flachkontakt 5 ist, gewährleistet ein richtiges Einstecken der Steckdose 1 in ihre Halterung am Armaturenbrett eines Kraftfahrzeuges. Zwei Zapfenlöcher 82, 83 in der Halteplatte 16 sind zum Durchstecken von Haltezapfen 33, 34 der unteren Isolationsscheibe 17 bestimmt.

Die in den Fig. 18 bis 22 dargestellte untere Isolationsscheibe 17 ist am Rand mit zwei Aussparungen 85 und 86 und in ihrer Mitte mit einem runden Schaftloch 87 für den Schaft 7 des zweiten Flachkontaktes 6 versehen. Auf der Unterseite der unteren Isolierscheibe 17 ist eine Vertiefung 88 zur Aufnahme des Schaftansatzes 8 des zweiten Flachkontaktes 6 eingearbeitet.

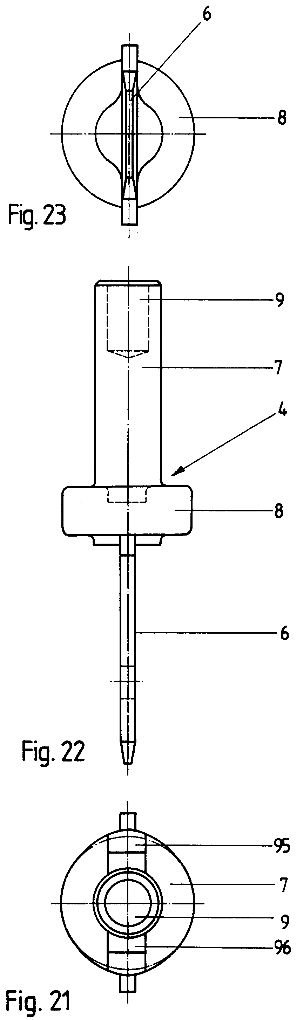

Die Fig. 21 bis 23 zeigen den zweiten Flachkontakt 6 mit dem Schaft 7 und dem Schaftansatz 8. Im Schaftansatz 8 sind zwei Absenkungen 95, 96 vorgesehen, in die Fixierzapfen 89, 90 der unteren Isolationsscheibe 17 zum Schutz gegen unerwünschte Verdrehungen des zweiten Flachkontaktes 6 eingreifen. Die Fixierzapfen 89, 90 befinden sich in der Vertiefung 88 der unteren Isolationsscheibe 17. Im Schaft 7 des zweiten Flachkontaktes 6 befindet sich eine axiale Bohrung 9, deren oberer Rand zu einem Schaft-Bördelrand umgebördelt ist und dadurch die in der Steckdose 1 zwischen der Bimetallfeder 3 und dem Schaftansatz 8 angeordneten Teile 10 bis 17 zusammenhält.

Bei einer Überlastung des im Stecker des Zigarrenanzünders befindlichen Heizelementes unterbricht der Bimetallkontaktgeber 11 den Heizstrom des Heizelementes oder schließt den Heizstromkreis kurz, so daß die Sicherung des Stromkreises anspricht und ebenfalls eine Unterbrechung hervorgerufen wird. Auf diese Weise wird eine Überhitzung des Zigarrenanzünders sicher verhindert und damit Folgeschäden vorgebeugt.

## Patentansprüche

1. Kfz-Steckdose für Kfz-Stecker, insbesondere zur Aufnahme eines Glühkopfsteckers für Zigarrenanzünder, mit einer Bimetallfeder (3) zur Kontaktierung des Steckers und mit einem Bimetallkontaktgeber (11), der beim Auftreten einer Überhitzung einen Schaltvorgang auslöst, durch den eine mittelbare oder unmittelbare Unterbrechung des die Steckdose (1) versorgenden Stromkreises erfolgt, und mit einer Arretierungssscheibe (10), die als Isolierkörper im Bodenbereich einer metallischen Steckdosenhülse (2) angeordnet ist und von einem, weitere Teile der Steckdose (1) verbindenen Schaft (79) durchdrungen ist, **dadurch gekennzeichnet,** daß zwischen der Arretierungsscheibe (10) und dem Boden der Steckdosenhülse (2) eine Kontaktkammer (22) ausgebildet ist, in der als erstes Kontaktteil der Bimetallkontaktgeber (11) und als zweites Kontaktteil ein Kontaktblech (14) angeordnet ist, und daß die beiden als Überhitzungsschutz wirkenden Kontaktteile (11, 14) durch die Arretierungsscheibe (10) zur Öffnung der Steckdose (1) hin abgedeckt sind.

2. Kfz-Steckdose nach Anspruch 1, dadurch gekennzeichnet, daß jedes der beiden Kontaktteile (11,14) mit einem anderen Pol einer Spannungsquelle zur Stromversorgung verbunden ist und ein Kontaktieren der beiden Kontaktteile (11, 14) im Fall einer Überhitzung, einen Kurzschluß bewirkt, der zum Ansprechen einer den Stromkreis schützenden Sicherung führt.

3. Kfz-Steckdose nach Anspruch 1 oder 2, dadurch gekennzeichnet, daß der Schaft (7) an seinem der Steckdosenöffnung zugewandten Ende mit einem Schaft-Bördelrand (19) auf der Bimetallfeder (3) aufliegt und nacheinander diese, die Arretierungsscheibe (10), den Bimetallkontaktgeber (11), eine obere Isolationsscheibe (12), das Kontaktblech (14), den Dosenboden (15) der Steckdosenhülse (2), eine Halteplatte (16) und eine untere Isolationsscheibe (17) durchdringt.

4. Kfz-Steckdose nach Anspruch 3, dadurch gekennzeichnet, daß der Schaft (7) an seinem anderen Ende einen Schaftansatz (8) besitzt, an den sich ein zweiter Flachkontakt (6) anschließt und die zwischen dem Schaftansatz (8) und dem Schaftbördelrand (19) liegenden Teile (3, 10 bis 17) durch den Schaft (7) zusammengehalten sind.

5. Kfz-Steckdose nach einem der vorhergehenden Ansprüche, dadurch gekennzeichnet, daß die Stromzuführung zu einem in die Steckdose (1) eingesteckten Stecker einerseits vom zweiten Flachkontakt (6) über den Schaft (7) zu der den Stecker kontaktierenden Bimetallfeder (3) und andererseits von einem ersten Flachkontakt (5) über eine Halteplatte (16) zu der den Stecker kontaktierenden Steckdosenhülse (2) verläuft.

6. Kfz-Steckdose nach Anspruch 5, dadurch gekennzeichnet, daß der Bimetallgeber (11) mit dem Schaft (7) kontaktiert und im Überhitzungsfall mit einem Kontaktniet (49) das Kontaktblech (14) berührt und den Stromkreis vor dem Stecker kurzschließt.

7. Kfz-Steckdose nach einem der vorhergehenden Ansprüche, dadurch gekennzeichnet, daß die Kontaktkammer (22) durch eine in der Arretierungsscheibe (10) vorge-sehene Ausnehmung (44, 45) erweitert ist und an der Arretierungsscheibe (10) zwei konische Fügezapfen (42, 43) angeformt sind, die den Bimetallkontaktgeber (11), das Kontaktblech (14) und den Dosenboden (15) durchgreifen.

8. Kfz-Steckdose nach Anspruch 7, dadurch gekennzeichnet, daß zwischen den Fügezapfen (42, 43) des Arretierungsteils (10) die obere Isolationsscheibe (12) mit die Fügezapfen (42, 43) teilweise aufnehmenden Mulden (71, 72) liegt und ihrerseits Haltestücke (27, 28) besitzt, mit denen sie in einen Durchgriffsschlitz (76) des Kontakblechs (14) eingreift, das durch Klemmsitz eine Einheit mit der oberen Isolationsscheibe (12) bildet.

9. Kfz-Steckdose nach einem der vorhergehenden Ansprüche, dadurch gekennzeichnet, daß das Arretierungsteil (10) beidseitig einer den Schaft (7) aufnehmenden Zentralbohrung (50) eine Vertiefung (38) mit Schrägflächen (39, 40) besitzt, die an die Form der hier einzusetzenden Bimetallfeder (3) angepaßt ist.

10. Kfz-Steckdose nach einem der vorhergehenden Ansprüche, dadurch gekennzeichnet, daß der Bimetallkontaktgeber (11) eine elastische Blattfeder ist, die eine Zunge (58) mit einem Mittelloch (56) und einem das Mittelloch (56) umschließenden, den Schaft (7) kontaktierenden Mittelloch-Bördelrand (64) besitzt und von der Zunge (58) ausgeht und beidseitig zu ihr sich zwei Seitenschenkel (59, 60) erstrecken, die das freie Ende der Zunge (58) mit einem Verbindungssteg (61) umschließen und daß auf dem Verbindungssteg (61) mittig der Kontaktniet (49) befestigt ist.

11. Kfz-Steckdose nach einem der vorhergehenden Ansprüche, dadurch gekennzeichnet, daß die Halteplatte (16) für den ersten Flachkontakt (5) unter dem Dosenboden (15), also außerhalb der Steckdosenhülse (2), auf ihm aufliegt und einen Fügeschlitz (78) zur Aufnahme der Fügezapfen (42, 43) der Arretierungsscheibe (10) und der Haltestücke (27, 28) der oberen Isolationsscheibe (12) besitzt, und daß rechtwinklig zur Halteplatte (16) der erste Flachkontakt (5) und diesem gegenüberliegend eine Lasche (81) angeformt ist und zwei Zapfenlöcher (82,83) in der Halteplatte (16) zum Einstecken von Haltezapfen (33, 34) der unteren Isolationsscheibe (17) dienen.

12. Kfz-Steckdose nach einem der vorhergehenden Ansprüche, dadurch gekennzeichnet, daß die untere Isolationsscheibe (17) an zwei gegenüberliegenden Seiten ihres im wesentlichen runden Außenrandes eine zum Schaftloch parallel verlaufende Aussparung (85, 86) besitzt und hierzu rechtwinklig versetzt der runde Außenrand an zwei gegenüberliegenden Seiten so abgeflacht ist, daß die Halteplatte (16) die Isolationsscheibe (17) mit dem ersten Flachkontakt (5) und der Lasche (81) übergreifen kann.

13. Kfz-Steckdose nach einem der vorhergehenden Ansprüche, dadurch gekennzeichnet, daß die untere Isolationsscheibe (17) nach außenliegend, konzentrisch zu ihrem Schaftloch (87) eine Vertiefung (88) besitzt und daß sich darin zwei Fixierzapfen (89, 90) befinden, und daß der zwischen dem Schaft (7) und dem Flachkontakt (6) liegende Schaftansatz (8) in der Vertiefung (88) ruht und durch die in Absenkungen (95, 96) eingreifenden Fixierzapfen (89, 90) verdrehungssicher gehalten sind.
